(19) Europäisches Patentamt
European Patent Office
Office européen des brevets

(11) **EP 2 983 412 A1**

(12) **EUROPEAN PATENT APPLICATION**
published in accordance with Art. 153(4) EPC

(43) Date of publication:
**10.02.2016 Bulletin 2016/06**

(51) Int Cl.:
**H04W 48/12** (2009.01)

(21) Application number: **14778622.2**

(22) Date of filing: **04.04.2014**

(86) International application number:
**PCT/JP2014/060007**

(87) International publication number:
**WO 2014/163195 (09.10.2014 Gazette 2014/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.04.2013   JP 2013078308**

(71) Applicant: **Sharp Kabushiki Kaisha**
**Osaka-shi, Osaka 545-8522 (JP)**

(72) Inventors:
• **YOKOMAKURA Kozue**
**Osaka-shi, Osaka 545-8522 (JP)**
• **YOSHIMOTO Takashi**
**Osaka-shi, Osaka 545-8522 (JP)**
• **YAMADA Ryota**
**Osaka-shi, Osaka 545-8522 (JP)**
• **KATO Katsuya**
**Osaka-shi, Osaka 545-8522 (JP)**

(74) Representative: **Müller Hoffmann & Partner Patentanwälte mbB**
**St.-Martin-Strasse 58**
**81541 München (DE)**

(54) **BASE STATION APPARATUS, TERMINAL APPARATUS AND COMMUNICATION SYSTEM**

(57)   A base station apparatus for transmitting a signal to a terminal apparatus connected thereto generates interference information indicating at least part of positions of resources of partial terminal apparatuses among terminal apparatuses other than the aforementioned terminal apparatus, and transmits the aforementioned interference information to the aforementioned terminal apparatus.

FIG. 2

**Description**

Technical Field

The present invention relates to a base station apparatus, a terminal apparatus, and a communication system.
This application claims priority based on Japanese Patent Application No. 2013-078308 filed in Japan on April 4, 2013, the content of which is incorporated herein.

Background Art

In a radio communication system such as a mobile phone or a Wireless LAN (Local Area Network), a multi-user MIMO (Multi Input Multi Output) technique that improves spectral efficiency by spatially multiplexing a plurality of reception apparatuses (for example, such as terminal apparatuses) has been adopted (NPL 1). In the multi-user MIMO technique, by performing precoding on a side of a transmission apparatus (for example, such as a base station apparatus), interference between terminal apparatuses (inter-user interference), which is caused by spatial multiplex, is suppressed.
Further, in a radio communication system under a multi-cell environment constituted by a plurality of cells, a coordinated communication technique that improves spectral efficiency by controlling interference occurring between cells or between sectors (inter-cell interference) has been studied (NPL 2). An example of a transmission method in the coordinated communication technique includes a coordinated beamforming scheme. In the coordinated beamforming scheme, by performing precoding mainly in a base station apparatus, interference applied to other cells is controlled to suppress inter-cell interference.

Citation List

Non Patent Literatures

NPL 1: Quentin H. Spencer, Christian B. Peel, A. Lee Swindlehurst, Martin Haardt, "An Introduction to the Multi-User MIMO Downlink," IEEE Communications Magazine, October 2004
NPL 2: 3GPP TR 36.814 V9.0.0 (2010-03)

Summary of Invention

Technical Problem

In the interference suppression technique on the base station apparatus side as described above, the terminal apparatus needs to send back estimated channel information to the base station apparatus as feedback in order to calculate a transmission weight used for precoding. At this time, the number of quantization bits of the channel information sent back as feedback by the terminal apparatus is desired to be large in order for the base station apparatus to suppress interference with high accuracy. Therefore, in the interference suppression technique on the base station apparatus side, an amount of feedback information increases.
However, from a viewpoint of, for example, prevention of decrease in spectral efficiency, the amount of feedback information is limited. When the amount of feedback information is small, accuracy of channel information to be sent back as feedback becomes low and precoding is performed by using an incomplete transmission weight. Thus, there is a problem that interference suppression performance is limited and the spectral efficiency is not able to be improved sufficiently.
One aspect of the invention is made in view of such circumstances and an object thereof is to provide a base station apparatus, a terminal apparatus, and a communication system capable of improving spectral efficiency by suppressing inter-user interference and inter-cell interference. Solution to Problem
Configurations of a base station apparatus, a terminal apparatus, and a communication system according to one aspect of the invention are as follows for solving the problem described above.
A base station apparatus according to one aspect of the invention is a base station apparatus that transmits a signal to a terminal apparatus connected thereto, in which interference information indicating at least part of positions of resources of partial terminal apparatuses among terminal apparatuses other than the terminal apparatus is generated, and the interference information is transmitted to the terminal apparatus.
Moreover, in the base station apparatus according to one aspect of the invention, the interference information may be resource allocation information.

Moreover, in the base station apparatus according to one aspect of the invention, the resource allocation information may be information indicating a position of a resource block.

Moreover, in the base station apparatus according to one aspect of the invention, the interference information may be information indicating a position of a resource in which resource allocation of the terminal apparatus and resource allocation of the partial terminal apparatuses are overlapped.

Moreover, in the base station apparatus according to one aspect of the invention, the interference information may be information of at least one terminal apparatus which exists in a same cell as that of the terminal apparatus.

Moreover, in the base station apparatus according to one aspect of the invention, the interference information may be information of at least one terminal apparatus which exists in a cell different from that of the terminal apparatus.

Moreover, in the base station apparatus according to one aspect of the invention, the interference information may be selected in order from interference information of a terminal apparatus that has the largest number of resources overlapping with resource allocation of the terminal apparatus among the partial terminal apparatuses.

Moreover, in the base station apparatus according to one aspect of the invention, the interference information may be selected in order from interference information of a terminal apparatus that has the largest transmission power to be allocated among the partial terminal apparatuses.

A terminal apparatus according to one aspect of the invention detects resource allocation information to the terminal apparatus and interference information which is information related to other terminal apparatuses from a control signal transmitted from a base station apparatus.

Moreover, in the terminal apparatus according to one aspect of the invention, a signal indicating a position of a resource included in the resource allocation information of the terminal apparatus and the interference information may be decoded among signals transmitted from the base station apparatus.

Moreover, in the terminal apparatus according to one aspect of the invention, an interfering terminal apparatus and an interfering resource position may be decided from the resource allocation information to the terminal apparatus and the interference information.

Moreover, in the terminal apparatus according to one aspect of the invention, an interfering terminal apparatus and an interfering resource position may be decided from the interference information.

Moreover, in the terminal apparatus according to one aspect of the invention, a received signal replica may be generated by using at least part of decoded data of the interfering resource position and the interfering terminal apparatus and subtracted from a signal transmitted from the base station apparatus.

A communication system according to one aspect of the invention is a communication system having a base station apparatus and a terminal apparatus, including the base station apparatus that generates interference information indicating at least part of positions of resources of partial terminal apparatuses among terminal apparatuses other than the terminal apparatus and transmits the interference information to the terminal apparatuses, and the terminal apparatus that receives control information notified from the base station apparatus and detects at least two pieces of resource allocation information from the control information.

Advantageous Effects of Invention

According to one aspect of the invention, it is possible to improve spectral efficiency by suppressing inter-user interference and inter-cell interference.

Brief Description of Drawings

[Fig. 1] Fig. 1 is a schematic view showing a configuration example of a communication system in a first embodiment.

[Fig. 2] Fig. 2 is a sequence diagram showing processing between a base station apparatus and a terminal apparatus in the communication system according to the first embodiment.

[Fig. 3] Fig. 3 is a schematic block diagram showing a configuration example of a base station apparatus 100-1 in the first embodiment.

[Fig. 4] Fig. 4 is a schematic block diagram showing a configuration example of a terminal apparatus 200-1 in the first embodiment.

[Fig. 5] Fig. 5 is a schematic block diagram showing a configuration example of a signal detection unit 207 in the first embodiment.

[Fig. 6] Fig. 6 is a schematic block diagram showing another configuration example of the signal detection unit 207 in the first embodiment.

[Fig. 7] Fig. 7 is a schematic block diagram showing another configuration example of the terminal apparatus 200-1 in the first embodiment.

[Fig. 8] Fig. 8 is a schematic block diagram showing a configuration example of a signal detection unit 260 in the first embodiment.

[Fig. 9] Fig. 9 is a schematic view showing another configuration example of the communication system in the first embodiment.

[Fig. 10] Fig. 10 is a schematic view showing a configuration example of a communication system in a second embodiment.

[Fig. 11] Fig. 11 is a sequence diagram showing processing between a base station apparatus and a terminal apparatus in the communication system according to the second embodiment.

[Fig. 12] Fig. 12 is a schematic view showing a configuration example of a communication system in a third embodiment.

[Fig. 13] Fig. 13 is a schematic view showing another configuration example of the communication system in the third embodiment.

[Fig. 14] Fig. 14 is a sequence diagram showing processing between base station apparatuses and a terminal apparatus in the communication system according to the third embodiment. Description of Embodiments

(First embodiment)

A first embodiment of the invention will be described below. A communication system in the present embodiment includes a base station apparatus (a transmission apparatus, a transmission point, a transmit antenna group, a transmit antenna port group, a component carrier, eNodeB) and a plurality of terminal apparatuses (a terminal apparatus, a mobile terminal, a reception point, a reception terminal, a reception apparatus, a receive antenna group, a receive antenna port group, UE).

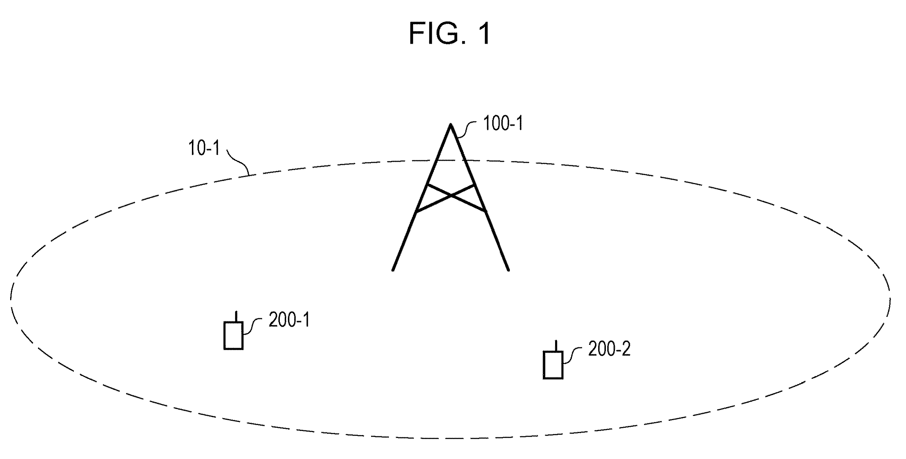

Fig. 1 is a schematic view showing a configuration example of the communication system in the present embodiment. As shown in Fig. 1, in the communication system of the present embodiment, two terminal apparatuses exist in a cell 10-1 which is a communication area of a base station apparatus 100-1. A terminal apparatus 200-1 and a terminal apparatus 200-2 are connected to the base station apparatus 100-1, and the base station apparatus 100-1 transmits a signal to the terminal apparatus 200-1 and a signal to the terminal apparatus 200-2 by using spatially multiplexing. When the terminal apparatus 200-1 and the terminal apparatus 200-2 are allocated to a same resource, the signal transmitted to the terminal apparatus 200-1 becomes a desired signal for the terminal apparatus 200-1 and becomes interference for the terminal apparatus 200-2. Moreover, the signal transmitted to the terminal apparatus 200-2 becomes interference for the terminal apparatus 200-1 and becomes a desired signal for the terminal apparatus 200-2. In this manner, the communication system of the present embodiment may be merely a communication system in which inter-user interference is caused when the base station apparatus spatially multiplexes a plurality of terminal apparatuses.

Note that, the resource is a unit for allocation which is defined by a predetermined frequency band or time section. For example, in a 3GPP (3rd Generation Partnership Project), there are a resource element which is defined by one OFDM symbol and one subcarrier, a resource block which is defined by fourteen OFDM symbols and twelve subcarriers, and the like. The resource block is a minimum unit of user arrangement and the base station apparatus allocates data of each of the terminal apparatuses with the resource block as a unit for allocation. In the present embodiment, information related to a position of a resource allocated to each of the terminal apparatuses is called resource allocation information, and, for example, a number of the resource block or the like is used.

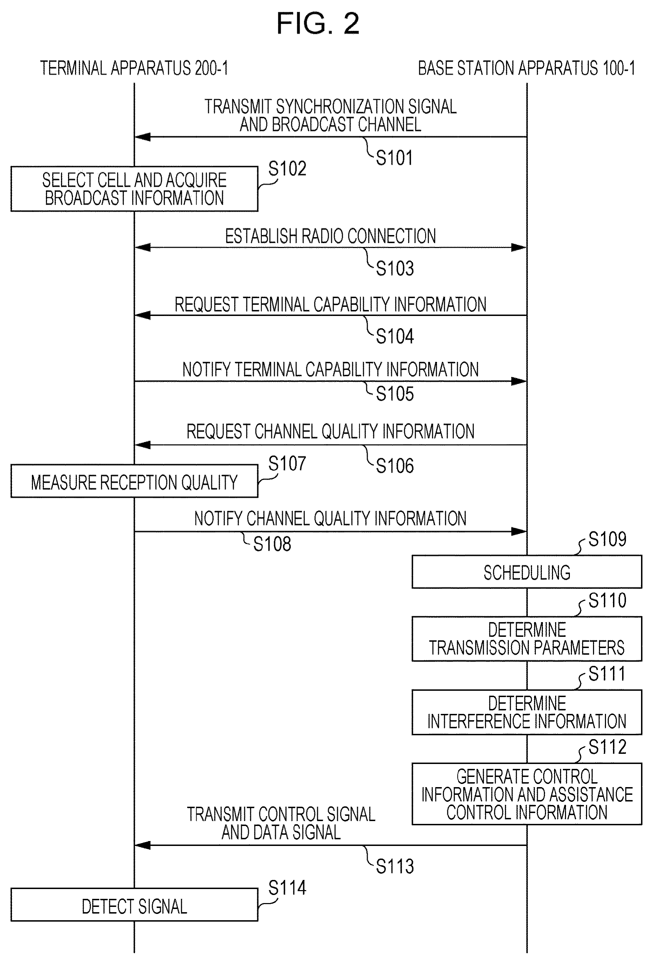

Fig. 2 is a sequence diagram showing processing between the base station apparatus and the terminal apparatus in the communication system according to the present embodiment. Fig. 2 shows connection between the base station apparatus 100-1 and the terminal apparatus 200-1 and data transmission processing of downlink in the communication system of Fig. 1. Note that, though not shown, similar processing is performed also between the base station apparatus 100-1 and the terminal apparatus 200-2 and the base station apparatus 100-1 performs radio connection with the terminal apparatus 200-2.

The base station apparatus 100-1 transmits a synchronization signal and a broadcast channel with a predetermined frequency band and timing, which are determined in the communication system (S101).

The terminal apparatus 200-1 receives the synchronization signal and performs cell selection (S102). The cell selection is to select a base station apparatus to which a terminal apparatus is connected. For example, the terminal apparatus 200-1 selects a base station apparatus which has a large reception electric field strength by correlation processing using the synchronization signal. In the present embodiment, as one example, the base station apparatus 100-1 is selected as the base station apparatus to which the terminal apparatus 200-1 is connected and frame synchronization and symbol synchronization of the terminal apparatus 200-1 are established. Moreover, the terminal apparatus 200-1 is also able to acquire a cell identification (ID) of the base station apparatus 100-1.

Further, the terminal apparatus 200-1 receives the broadcast channel and acquires broadcast information from the broadcast channel (S102). The broadcast information is basic system information (for example, also called MIB; Master Information Block) such as a system bandwidth, a system frame number, and the number of transmit antennas in the base station apparatus 100-1.

The base station apparatus 100-1 and the terminal apparatus 200-1 establish radio connection (S103).

The base station apparatus 100-1 requests terminal capability information to the terminal apparatus 200-1 (S104). The terminal apparatus 200-1 receives the request of the terminal capability information and notifies the base station apparatus 100-1 of the terminal capability information (S105). The terminal capability information is information related to a function provided in the terminal apparatus, and the like. For example, in LTE (Long Term Evolution) or the like, UE capability Information is able to be used.

The terminal apparatus 200-1 is able to include, as the terminal capability information, a category of the terminal apparatus, information that an interference suppression function (or cancel function) is included, an interference suppression method that the terminal apparatus has, and the like.

Further, the terminal apparatus 200-1 is able to include, as the terminal capability information, information that a function of assist by a network (for example, sharing information related to other cells or other terminal apparatuses associated with a higher layer than a physical layer) is provided. In addition, the terminal apparatus 200-1 is able to include, as the terminal capability information, release with which the terminal apparatus is able to cope (for example, a version of standard).

The base station apparatus 100-1 requests channel quality information (CQI) to the terminal apparatus 200-1 (S106).

The terminal apparatus 200-1 receives the request of the channel quality information and measures reception quality (S107). The terminal apparatus 200-1 measures the reception quality by using a reference signal and the like (for example, CRS, CSI-RS) transmitted from the base station apparatus 100-1. A reception electric field strength, an SNR (Signal to Noise Ratio), an SINR (Signal to Interference and Noise Ratio), and the like correspond to the reception quality.

The terminal apparatus 200-1 notifies the base station apparatus 100-1 of information indicating a rank (for example, RI; Rank Indicator) of the channel quality information (CQI report), and precoding (for example, PMI; Precoding Matrix Indicator) (S108). Note that, the channel quality information may be the reception quality or may be a code book which is prescribed in advance in the communication system by receivable MCS (Modulation and Coding Scheme) information or the like.

The base station apparatus 100-1 performs scheduling of terminal apparatuses to be connected thereto (S109). The scheduling is to determine resource allocation of the terminal apparatuses to which the base station apparatus is connected. In the present embodiment, a communication frame composed of six resource blocks is used and resource blocks are respectively RB1 to RB6. In the present embodiment, as one example, the base station apparatus 100-1 determines resource allocation of the terminal apparatus 200-1 as the RB2, the RB3 and the RB4 and resource allocation of the terminal apparatus 200-2 as the RB1, the RB2 and the RB3. That is, resource allocation information of the terminal apparatus 200-1 is the RB2, the RB3 and the RB4 and resource allocation information of the terminal apparatus 200-2 is the RB1, the RB2 and the RB3.

The base station apparatus 100-1 determines transmission parameters in downlink (S110). Based on the terminal capability information, the channel quality information and the like notified from the terminal apparatus 200-1 and the terminal apparatus 200-2, the base station apparatus 100-1 determines transmission parameters for each of the terminal apparatuses. Examples of the transmission parameters include MCS information, a rank, a port number, and a transmission mode (precoding, transmit diversity or the like). Note that, the base station apparatus 100-1 may determine the transmission parameters for each of the terminal apparatuses.

The aforementioned MCS information is a modulation coding method which is applied to information data transmitted by the base station apparatus 100-1 to each of the terminal apparatuses. Examples of modulation processing include BPSK (Binary Phase Shift Keying), QPSK (Quadrature Phase Shift Keying), and M-QAM (M-Quadrature Amplitude Modulation, for example, M = 16, 64, 256, 1024, 4096). In error correction coding, a coding rate thereof is applied.

The aforementioned rank is the number of spatial multiplex of the signal transmitted by the base station apparatus 100-1 to each of the terminal apparatuses. In the case of spatially multiplexing a plurality of terminal apparatuses for transmission (MU-MIMO), when a terminal apparatus which has received notification that the interference suppression function is provided is included in the terminals, a higher layer 101 is desired to determine the number of spatial multiplex of each of the terminal apparatuses with the rank of a signal transmitted to the terminal apparatus which has received the notification that the interference suppression function is provided as an upper limit.

The aforementioned port number indicates from which antenna port the base station apparatus 100-1 transmits a transmission signal to each of the terminal apparatuses.

The base station apparatus 100-1 determines interference information by using the resource allocation information of each of the terminal apparatuses (S111). The interference information is information indicating a position of a resource in which a certain terminal apparatus is interfered due to communication of another terminal apparatus. Moreover, when the base station apparatus notifies a terminal apparatus of the interference information, the terminal apparatus is able to know a position of the resource in which the terminal apparatus is interfered. That is, the interference information may be said also as information indicating a position of a resource in which each terminal apparatus is interfered. For example, interference information of a certain terminal apparatus may be set as resource allocation information of another terminal apparatus. In this case, the base station apparatus 100-1 determines the interference information of the terminal apparatus 200-1 as the RB1, the RB2 and the RB3 and the interference information of the terminal apparatus 200-2 as the RB2, the RB3 and the RB4.

The interference information of a certain terminal apparatus may be a resource in which resource allocation of the certain terminal apparatus and resource allocation of another terminal apparatus are overlapped. In the present embodiment, the RB2 and the RB3 of the resource allocation of the terminal apparatus 200-1 are overlapped with the resource allocation of the terminal apparatus 200-2. Therefore, the terminal apparatus 200-1 is interfered in the resource blocks of the RB2 and the RB3. Accordingly, the base station apparatus 100-1 determines the interference information of the terminal apparatus 200-1 as the RB2 and the RB3 and determines the interference information of the terminal apparatus 200-2 as the RB2 and the RB3.

The base station apparatus 100-1 generates control information and assistance control information (S112). Note that, though description will be given below by using an example that the control information and the assistance control information are notified to each terminal apparatus, the control information and the assistance control information may be notified, with resource allocation information of a plurality of terminal apparatuses to be detected (for example, such as a terminal apparatus group which is multiplexed by the multi-user MIMO) as one piece of control information, to the plurality of terminal apparatuses. In this case, the control information may be subjected to scrambling or masking so that one piece of control information is able to be detected by the plurality of terminal apparatuses by a method of, for example, allocating user group identifications (IDs) to the plurality of terminal apparatuses to be detected. Moreover, the control information and the assistance control information may be notified to the terminal apparatuses by a physical control channel of downlink (for example, a DCI (Downlink Control Information) format transmitted on a PDCCH (Physical Downlink Control Channel) or an EDPCCH (Enhanced PDCCH) in LTE) or may be notified through a medium access control (MAC) layer, and a notification method is not limited. Note that, though description will be given by discriminating the control information and the assistance control information in the present embodiment, they may be simply referred to as control information.

The control information is information needed for each terminal apparatus to demodulate and decode a data signal (desired signal) transmitted to the terminal apparatus. For example, the control information of the terminal apparatus 200-1 is the resource allocation information of the terminal apparatus 200-1, transmission parameters of the terminal apparatus 200-1, and the like. Moreover, the control information of the terminal apparatus 200-2 is the resource allocation information of the terminal apparatus 200-2, transmission parameters of the terminal apparatus 200-2, and the like.

In each terminal apparatus, the assistance control information is information needed for suppressing interference due to communication of another terminal apparatus which is connected to the base station apparatus. For example, the assistance control information of the terminal apparatus 200-1 is the interference information of the terminal apparatus 200-1, the transmission parameters of the terminal apparatus 200-2, and the like. Moreover, the assistance control information of the terminal apparatus 200-2 is a reference signal for estimating interference, the interference information of the terminal apparatus 200-2, the transmission parameters of the terminal apparatus 200-1, and the like. In this manner, the assistance control information includes not the resource allocation information but the interference information.

The base station apparatus 100-1 generates a control signal from the control information, the assistance control information and the like, and transmits the control signal and a data signal to the terminal apparatus (S113). The control information and the assistance control information are able to be included in a PDCCH (Physical Downlink Control CHannel), an EPDCCH (Enhanced Physical Downlink Control CHannel) or a PDSCH (Physical Downlink Shared CHannel) in the LTE or the like.

The terminal apparatus 200-1 receives the signals transmitted by the base station apparatus 100-1 and detects the data signal addressed to the terminal apparatus (S114).

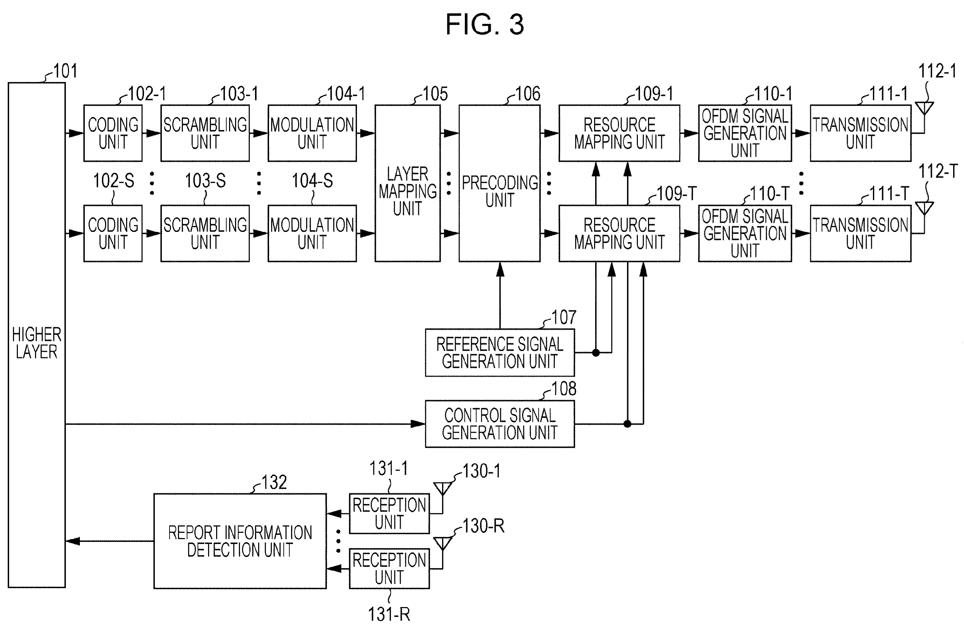

Fig. 3 is a schematic block diagram showing a configuration of the base station apparatus 100-1 in the present embodiment. The base station apparatus 100-1 includes the higher layer 101, coding units 102-1 to 102-S, scrambling units 103-1 to 103-S, modulation units 104-1 to 104-S, a layer mapping unit 105, a precoding unit 106, a reference signal generation unit 107, a control signal generation unit 108, resource mapping units 109-1 to 109-T, OFDM signal generation units 110-1 to 110-T, transmission units 111-1 to 111-T, transmit antenna units 112-1 to 112-T, receive antenna units 130-1 to 130-R, reception units 131-1 to 131-R and a report information detection unit 132. Here, S, T and R represent the number of streams, the number of transmit antennas and the number of receive antennas, respectively. Note that, when a part or all of the base station apparatus 100-1 is formed into a chip to be an integrated circuit, a chip control circuit that performs control for each functional block is included. Moreover, the present embodiment provides the block diagram of the base station apparatus 100-1 and the terminal apparatuses 200-1 and 200-2 described below in the case of OFDM transmission, which is applicable also in the case of single carrier transmission such as SC-FDMA (Single Carrier-Frequency Division Multiple Access) or DFT-s-OFDM (Discrete Fourier Transform-spread-OFDM).

The base station apparatus 100-1 receives signals transmitted by the terminal apparatuses 200-1 and 200-2 (uplink signals) through the receive antenna units 130-1 to 130-R. The uplink signals include a data signal channel that transmits information data and the control information (for example, an uplink shared channel PUSCH; Physical Uplink Shared Channel in the LTE or the like) and a control channel that transmits the control information (for example, an uplink control channel PUCCH; Physical Uplink Control Channel in the LTE or the like).

The reception units 131-1 to 131-R perform down conversion (radio frequency conversion) of the signals received by the receive antenna units 131-1 to 131-R to frequency bands capable of digital signal processing such as signal detection processing, and further perform filtering processing to convert the signals subjected to the filtering processing from analog signals to digital signals (analog to digital conversion). The reception units 131-1 to 131-R further perform demodulation processing and decoding processing by using the aforementioned digital signals. This makes it possible to acquire various signals described above (the data signal channel, the control channel and the like) from the uplink signals.

The report information detection unit 132 detects the control channel which is sent back as feedback from the terminal apparatus to be connected to output to the higher layer 101. Control information included in the aforementioned channel includes, for example, information needed for establishing radio connection between the base station apparatus and the terminal apparatus (for example, RRC Connection Request, RRC connection Setup Complete or the like), terminal capability information, and channel quality information, which are transmitted by the terminal apparatus.

The higher layer 101 is a hierarchy of a function higher than a physical layer among hierarchies of a communication function defined by an OSI reference model, for example, MAC (Media Access Control), a data link layer, a network layer or the like. Moreover, the higher layer 101 also notifies other parameters needed for each part constituting the base station apparatus 100-1 to exert a function.

The higher layer 101 performs scheduling of the terminal apparatuses to be connected, determines resource allocation information of each of the terminal apparatuses (S109 of Fig. 2), and determines transmission parameters (MCS information, a rank, scheduling, a port number, a transmission mode and the like) of each of the terminal apparatuses (S110 of Fig. 2). Further, the higher layer 101 determines interference information of each of the terminal apparatuses from the resource allocation information of each of the terminal apparatuses (S111 of Fig. 2).

The higher layer 101 generates information data to output to the coding units 102-1 to 102-S. The information data is, for example, an audio signal associated with a call, a still image or moving image signal representing a photographed image, a character message or the like.

The higher layer 101 calculates a transmission weight (precoding matrix) which makes SNR of received signals of the terminal apparatuses excellent, and outputs the transmission weight to the precoding unit 106. Note that, the higher layer 101 is able to select the aforementioned precoding from a code book which is determined in advance in the communication system.

The higher layer 101 outputs the resource allocation information, the interference information and the transmission parameters to the control signal generation unit 108.

The control signal generation unit 108 generates control information and assistance control information by using the resource allocation information, the interference information and the transmission parameters, which are input from the higher layer (S112 of Fig. 2). In the present embodiment, the control information of the terminal apparatus 200-1 is the resource allocation information of the terminal apparatus 200-1, transmission parameters of the terminal apparatus 200-1, and the like, and the control information of the terminal apparatus 200-2 is the resource allocation information of the terminal apparatus 200-2, transmission parameters of the terminal apparatus 200-2, and the like. Further, the assistance control information of the terminal apparatus 200-1 is the interference information of the terminal apparatus 200-1, the transmission parameters of the terminal apparatus 200-2, and the like. Moreover, the assistance control information of the terminal apparatus 200-2 is the reference signal for estimating interference, the interference information of the terminal apparatus 200-2, the transmission parameters of the terminal apparatus 200-1, and the like.

The control signal generation unit 108 generates a control signal to be transmitted to each terminal apparatus by using the control information and the assistance control information (S113 of Fig. 2). Moreover, the control signal generation unit 108 generates a synchronization signal and a broadcast channel.

The coding units 102-1 to 102-S perform error correction coding for the information data input from the higher layer 101 to generate coded bits (also referred to as code words). Examples of a coding method which is used when the coding units 102-1 to 102-S perform the error correction coding include turbo coding, convolutional coding, and low density parity check coding (LDPC).

Note that, the coding units 102-1 to 102-S may perform rate matching processing for a coded bit sequence in order to match a coding rate of a data sequence subjected to the error correction coding with a coding rate corresponding to a data transmission rate. Moreover, the coding units 102-1 to 102-S may have a function of sorting data sequences subjected to the error correction coding for interleaving. Further, the error correction coding is performed based on a coding rate of the MCS information.

The scrambling units 103-1 to 103-S perform scrambling based on a cell ID of the base station apparatus for code words input from the coding units 102-1 to 102-S. Note that, information related to a scramble pattern is able to be included in the control signal.

The modulation units 104-1 to 104-S perform mapping of the code words after scrambling, which are input, to data modulation symbols. Note that, data modulation processing is performed based on a modulation order of the aforementioned MCS information. Note that, the modulation units 104-1 to 104-S may have a function of sorting the generated modulation symbols for interleaving. Information related to the interleaving pattern is able to be included in the control information.

Here, S is at least the number of terminal apparatuses which transmit signals spatially multiplexed by the base station apparatus 100-1. Since the terminal apparatus 200-1 and the terminal apparatus 200-2 are spatially multiplexed with the base station apparatus 100-1 in Fig. 1, S is 2 or more. Specifically, when the base station apparatus 100-1 transmits a data signal channel to each of the terminal apparatuses by one stream, the coding unit 102-1, the scrambling unit 103-1 and the modulation unit 104-1 are to generate a data signal channel to be transmitted to the terminal apparatus 200-1, and the coding unit 102-2, the scrambling unit 103-2 and the modulation unit 104-2 are to generate a data signal channel to be transmitted to the terminal apparatus 200-2.

The layer mapping unit 105 performs layer mapping of the data modulation symbols, which are input from the modulation units 104-1 to 104-S, for spatial multiplex. The number of layers for mapping conforms to the rank of each terminal apparatus determined by the higher layer 101. For example, the LTE or the like supports up to eight layers and one code word is subjected to mapping to up to four layers.

The reference signal generation unit 107 generates reference signals and outputs a reference signal for which precoding is to be performed to the precoding unit 106. The reference signal for which precoding is to be performed is, for example, a demodulation reference signal (DM-RS). Moreover, the reference signal generation unit 107 outputs a reference signal for which precoding is not to be performed to the resource mapping units 109-1 to 109-T. The reference signal for which precoding is not to be performed is, for example, a cell specific reference signal (CRS) or a measurement reference signal (CSI-RS: CSI-Reference Signal).

The precoding unit 106 multiplies an output of the aforementioned layer mapping unit 106 by the transmission weight determined by the higher layer 101, and generates a signal of each transmit antenna port.

The resource mapping units 109-1 to 109-T perform mapping of the output of the precoding unit 106, the reference signal, the control signal and the like into resources in accordance with the resource allocation information.

Outputs of the resource mapping units 109-1 to 109-T are transmitted from the transmit antennas 112-1 to 112-T after being subjected to IFFT (Inverse Fast Fourier Transform) and insertion of a cyclic prefix (CP) at the OFDM signal generation units 110-1 to 110-T, digital/analog conversion, filtering, frequency conversion and the like at the transmission units 111-1 to 111-T.

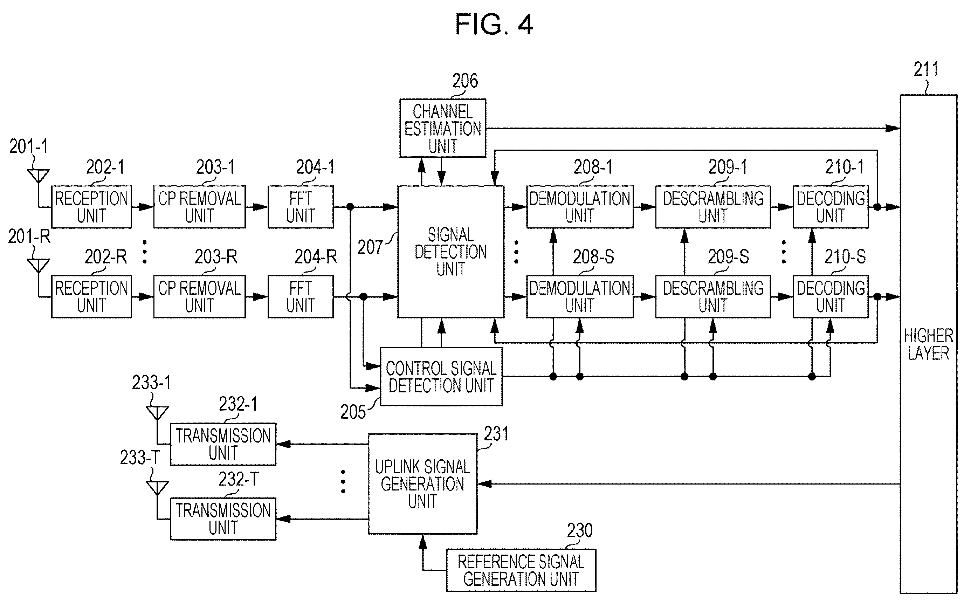

Fig. 4 is a schematic block diagram showing a configuration of the terminal apparatus 200-1 in the present embodiment. The terminal apparatus 200-1 includes receive antennas 201-1 to 201-R, reception units 202-1 to 202-R, CP removal units 203-1 to 203-R, FFT (Fast Fourier Transform) units 204-1 to 204-R, a control signal detection unit 205, a channel estimation unit 206, a signal detection unit 207, demodulation units 208-1 to 208-S, descrambling units 209-1 to 209-S, decoding units 210-1 to 210-S, a higher layer 211, a reference signal generation unit 230, an uplink signal generation unit 231, transmission units 232-1 to 232-T, and transmit antennas 233-1 to 233-T. Moreover, when a part or all of the terminal apparatus 200-1 is formed into a chip to be an integrated circuit, a chip control circuit (not shown) that performs control for each functional block is included. Note that, R represents the number of receive antennas. Further, though the number of transmit antennas is set as T to have the same number as that of the base station apparatus 100-1, the invention is not limited thereto and the terminal apparatus and the base station apparatus may have the different numbers of antennas. In addition, a configuration of the terminal apparatus 200-2 is similar to Fig. 4.

The reception units 202-1 to 202-R receive signals, which are transmitted by the base station apparatus 100-1 with the transmit antennas 112-1 to 112-T, through the receive antennas 201-1 to 201-R. That is, the reception unit 202-1 receives a signal transmitted to the terminal apparatus 200-1 and a signal transmitted to the terminal apparatus 200-2 by the base station apparatus 100-1. Further, the reception units 202-1 to 202-R perform reception frequency conversion, filtering, analog/digital conversion and the like for the received signals. For outputs of the reception units 202-1 to 202-R, removal of a cyclic prefix is performed at the CP removal units 203-1 to 203-R and time frequency conversion is performed at the FFT units 204-1 to 204-R.

The control signal detection unit 205 extracts a control signal included in the signals after the time frequency conversion to acquire a reference signal, control information and assistance control information. The control signal detection unit 205 outputs resource allocation information, interference information, the reference signal, transmission parameters (MCS information, a rank, a port number, a transmission mode) and the like to each part.

The channel estimation unit 206 performs measurement of reception quality (S107 of Fig. 2) and channel estimation by using the reference signal. Further, the channel estimation unit 206 outputs the reception quality to the higher layer 211 and outputs a channel estimation value to the signal detection unit 207 and the higher layer 211.

The signal detection unit 207 detects a data signal and a control signal transmitted to the signal detection unit.

Moreover, the signal detection unit 207 detects a data signal and a control signal transmitted to other than the signal detection unit. Here, at the time of the detection, the signal detection unit 207 is able to use the channel estimation value, the rank, the transmission mode, the resource allocation information, the interference information and the like. Further, the signal detection unit 207 is able to use decoding results which are input from the decoding units 210-1 to 210-S for signal detection.

The demodulation units 208-1 to 208-S perform demodulation processing for the signals input from the signal detection unit 207 and calculates a bit log likelihood ratio (LLR). At the time of the demodulation processing, the demodulation units 208-1 to 208-S are able to use MCS information. Note that, the LLR may be referred to as demodulation data or one obtained by making hard decision of the LLR may be used as demodulation data.

The descrambling units 209-1 to 209-S perform descrambling for the base station apparatus and calculate a bit log likelihood ratio of code words.

The decoding units 210-1 to 210-S perform error correction decoding for the bit log likelihood ratio of the code words (bit log likelihood ratio after demodulation), and generate information data and various control data (a request of terminal capability information, a request of channel quality information) transmitted to the decoding units to output to the higher layer 211. Note that, the higher layer 211 is able to notify each unit of control information (such as MCS information applied to the terminal apparatus or other terminal apparatuses) for the aforementioned demodulation processing, descrambling and decoding processing. Here, at the time of the demodulation processing, the decoding units 210-1 to 210-S are able to use MCS information included in the aforementioned control information and assistance control information. Further, the decoding units 210-1 to 210-S may output the bit log likelihood ratio after decoding to the signal detection unit 207 or may output a bit sequence obtained by making hard decision of the bit log likelihood ratio after decoding to the signal detection unit 207. Note that, the bit log likelihood ratio after decoding and the bit sequence obtained by making hard decision of the bit log likelihood ratio after decoding may be referred to as decoded data.

The higher layer 211 outputs terminal capability information of the terminal apparatus to the uplink signal generation unit 231 in response to the request of the terminal capability information. The higher layer 211 outputs channel quality information and the like to the uplink signal generation unit 231 in response to the request of notification of the channel quality information and the like. Further, the higher layer 211 acquires the information data output by the decoding units 210-1 to 210-S.

The terminal apparatus 200-1 also has a function of transmitting a signal. The reference signal generation unit 230 generates a reference signal for uplink. The uplink signal generation unit 231 generates, as the uplink signal, a signal including the aforementioned terminal capability information, channel quality information and the like. The uplink signal is a signal composed of an SC-FDMA symbol and an OFDMA symbol. An output of the uplink signal generation unit 231 is subjected to digital/analog conversion, filtering, frequency conversion and the like at the transmission units 232-1 to 232-T and transmitted from the transmit antennas 233-1 to 233-T.

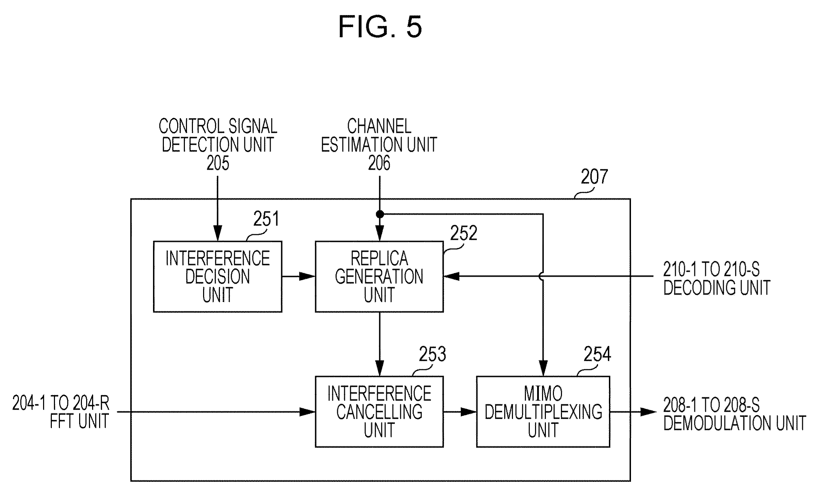

Fig. 5 is a schematic block diagram showing a configuration example of the signal detection unit 207 in the present embodiment. The signal detection unit 207 of Fig. 5 is a block in the case of including a successive interference canceller (SIC; Successive Interference Cancellation) as interference suppression processing. The signal detection unit 207 of Fig. 5 is constituted by an interference decision unit 251, a replica generation unit 252, an interference cancelling unit 253 and a MIMO demultiplexing unit 254.

The interference decision unit 251 decides an interfering terminal apparatus and an interfering resource position (for example, a resource block which includes interference) by using the resource allocation information and the interference information, which are input, to output to the replica generation unit 252. For example, when resource allocation information of another terminal apparatus is notified as the interference information, the interference decision unit 251 of the terminal apparatus 200-1 extracts resource blocks in which the resource allocation information of the terminal apparatus 200-1 (the RB2, the RB3 and the RB4) and the interference information of the terminal apparatus 200-1 (the RB1, the RB2 and the RB3) are overlapped. The interference decision unit 251 sets the extracted resource blocks (the RB2 and the RB3) as the resource blocks which include interference and outputs the interfering terminal apparatus (terminal apparatus 200-2) and the interfering resource positions (the RB2 and the RB3) to the replica generation unit 252.

The replica generation unit 252 generates a received signal replica by using the channel estimation value input from the channel estimation unit 206 and the LLR input from the decoding units 210-1 to 210-S. Moreover, at the time of generating the received signal replica, the replica generation unit 252 generates the interfering received signal replica by using the interfering terminal apparatus and the interfering resource positions input from the interference decision unit 251. For example, the received signal replica is generated by using the LLR of the interfering resource positions (the RB2 and the RB3) among the LLRs of the interfering terminal apparatus (terminal apparatus 200-2). The interference cancelling unit 253 subtracts the aforementioned received signal replica from the signals input from the FFT units 204-1 to 204-R and outputs a result thereof to the demodulation units 208-1 to 208-S.

Here, a signal R(k) in a k-th subcarrier, which is input to the signal detection unit 207 of the terminal apparatus 200-1, is shown in following formulas. Here, D is the number of sequences of an output S(k) of the layer mapping unit 105 (the number of spatial multiplex). Further, a matrix H is an equivalent channel matrix including precoding. Furthermore, N(k) represents a noise and $^T$ represents a transposed matrix.

[Expression 1]

$$\mathbf{R}\,(k)=\mathbf{H}\,(k)\mathbf{S}\,(k)+\mathbf{N}(k)\quad\cdots(1)$$

[Expression 2]

$$\mathbf{R}\,(k)=\begin{bmatrix}R_1(k) & \cdots & R_R(k)\end{bmatrix}^T\quad\cdots(2)$$

[Expression 3]

$$\mathbf{H}\,(k)=\begin{pmatrix}H_{11}(k) & \cdots & H_{1D}(k)\\ \vdots & \ddots & \vdots\\ H_{R1}(k) & \cdots & H_{RD}(k)\end{pmatrix}\quad\cdots(3)$$

[Expression 4]

$$\mathbf{S}\,(k)=\begin{bmatrix}S_1(k) & \cdots & S_D(k)\end{bmatrix}^T\quad\cdots(4)$$

[Expression 5]

$$\mathbf{N}(k)=\begin{bmatrix}N_1(k) & \cdots & N_R(k)\end{bmatrix}^T\quad\cdots(5)$$

The interference cancelling unit 253 subtracts the received signal replica (stream replica) generated at the replica generation unit 252 from the output signal of the FFT units. An output signal $R\sim_{n,i}(k)$ of the interference cancelling unit when an n-th stream (n is 1 ..., D) is subtracted at the time of i-th iterative processing is shown in a following formula.

[Expression 6]

$$\widetilde{R}_{n,i}(k)=R(k)-\hat{R}_{n,i}(k)\quad\cdots(6)$$

Here, R(k) indicates an output of FFT, $R^{\wedge}_{n,i}(k)$ indicates the received signal replica of the stream which is removed in the n-th time in the i-th iterative processing, and k indicates a subcarrier index. Note that, $R^{\wedge}_{1,0}(k) = 0$.

The interference replica $R^{\wedge}_{n,i}(k)$ is generated by using a data modulation symbol replica which is generated by using the LLR output by the decoding units 210-1 to 210-S and the channel estimation value estimated by the channel estimation unit 206. For example, when performing signal detection of the n-th stream, received signal replicas of a stream 1 to a stream (n-1) and a stream (n+1) to a stream D are generated. Specifically, at the time of the i-th iterative processing, symbol replicas of the stream 1 to the stream (n-1), which are generated in the i-th iterative processing, symbol replicas of the stream (n+1) to the stream D, which are generated in i-1-th iterative processing, and the channel estimation value are used to generate interference replicas. An output signal $R^{\wedge}_{n,i}(k)$ of a reception replica generation unit with respect to the n-th stream at the time of the i-th iterative processing is shown in a following formula.

[Expression 7]

$$\hat{R}_{n,i}(k) = \left( \sum_{u=1}^{n-1} H_u(k)\hat{S}_{u,i}(k) + \sum_{u=n+1}^{D} H_u(k)\hat{S}_{u,i-1}(k) \right) \quad \cdots (7)$$

Here, $H_u(k)$ is a channel estimation value of a stream u, and $S\hat{}_{u,i}(k)$ is a modulation symbol replica which is generated for the stream u in the i-th iterative processing.

Note that, in the case of i = 0 (initial processing), the received signal replicas are generated from only the symbol replicas of the stream 1 to the stream (n-1), which have been already generated in 0-th iterative processing, and the channel estimation value.

The replica generation unit 252 generates a data modulation symbol replica by QPSK modulation, 16QAM modulation or the like by using the output signals from the decoding units. Processing of a modulation symbol replica generation unit will be described by exemplifying QPSK modulation. When LLRs of bits forming the QPSK modulation symbol are $\lambda(b_0)$ and $\lambda(b_1)$, the replica of the QPSK modulation symbol is given by following (8).

[Expression 8]

$$\frac{1}{\sqrt{2}}\tanh(\lambda(b_0)/2) + \frac{j}{\sqrt{2}}\tanh(\lambda(b_1)/2) \quad \cdots (8)$$

Here, j represents an imaginary number. Note that, also in other modulation such as 16QAM, the symbol replica is able to be generated similarly. Moreover, when a hard-decision bit sequence is input, it is also possible to use a replica which is generated by performing error correction coding and modulation similarly to processing applied in the base station apparatus.

The MIMO demultiplexing unit 254 performs demultiplexing of a stream of a signal subjected to spatial multiplex (MIMO) with respect to the output of the interference cancelling unit 253 by using the channel estimation value which is the output of the channel estimation unit 206. As a demultiplexing method, a method for reproducing a data signal of the stream by maximum likelihood detection (for example, MLD; Maxmum Likihood Detection) is applicable. Moreover, a demultiplexing method of, for example, calculating an MMSE weight or the like for the output of the interference cancelling unit 253 and multiplying the output of the interference cancelling unit 253 by the calculated weight is able to be used.

For example, the MIMO demultiplexing unit 254 multiplies an output signal which is obtained after subtracting the n-th stream by the interference cancelling unit 253 by weight coefficients $W_{ZF,n}(k)$ and $W_{MMSE,n}(k)$ based on a ZF reference and an MMSE reference, thus making it possible to demultiplex the stream.

[Expression 9]

$$\mathbf{W}_{ZF,n}(k) = \mathbf{H}_n^{H}(k)\left(\mathbf{H}_n(k)\mathbf{H}_n^{H}(k)\right)^{-1} \quad \cdots (9)$$

[Expression 10]

$$\mathbf{W}_{MMSE,n}(k) = \mathbf{H}_n^{H}(k)\left(\mathbf{H}_n(k)\mathbf{H}_n^{H}(k) + \sigma^2\mathbf{I}_R\right)^{-1} \quad \cdots (10)$$

The aforementioned (9) or (10) is able to be used. Here, [H] represents a complex conjugate transpose, [-1] represents an inverse matrix, $\sigma^2$ represents an interference cancelling residual and a variance of noise and $I_R$ represents a unit matrix of R x R.

Moreover, $H_n(k)$ in the case of initial processing (i = 0) in an iterative successive interference canceller is shown in following (11).

[Expression 11]

$$\mathbf{H}_n(k) = \begin{pmatrix} H_{1n}(k) & \cdots & H_{1D}(k) \\ \vdots & \ddots & \vdots \\ H_{Rn}(k) & \cdots & H_{RD}(k) \end{pmatrix} \quad \cdots(11)$$

$H_n(k)$ in the case of iterative processing (i > 0) in the iterative successive interference canceller is able to be shown in following (12).

[Expression 12]

$$\mathbf{H}_n(k) = \begin{pmatrix} H_{1n} \\ \vdots \\ H_{Rn} \end{pmatrix} \quad \cdots(12)$$

The signal detection unit 207 is able to acquire the aforementioned number of streams D by using information indicating a rank and information indicating a transmission mode, which are included in the aforementioned control information and the aforementioned assistance control information. Moreover, the signal detection unit 207 is able to acquire MCS information included in the aforementioned control information and the aforementioned assistance control information at the time of generating the aforementioned data modulation symbol replica.

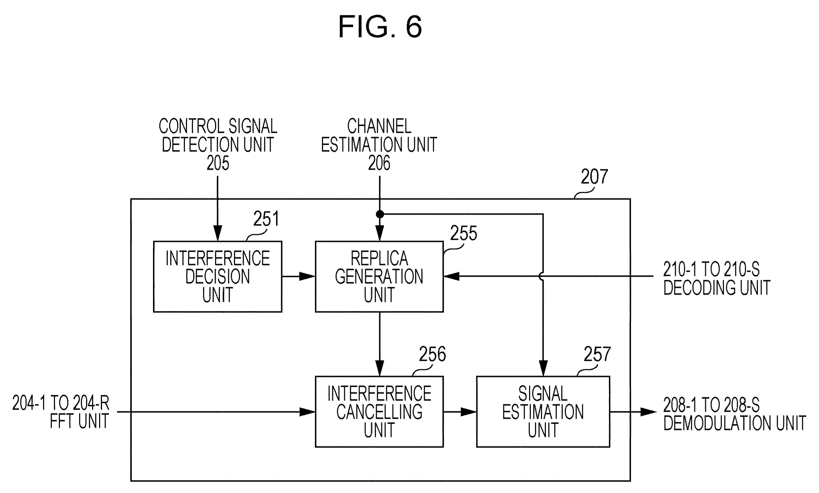

Fig. 6 is another schematic block diagram showing the configuration of the signal detection unit 207 in the present embodiment. The signal detection unit 207 of Fig. 6 is formed of the interference decision unit 251, a replica generation unit 255, an interference cancelling unit 256 and a signal estimation unit 257. A part having different processing from that of Fig. 5 will be mainly described below. Fig. 6 is an example using MMSE-IRC (MMSE-Interference Rejection Combining) and the successive interference canceller.

It is set that NUE is the number of terminal apparatuses and m is an index of a terminal apparatus to be detected, and a matrix H(k) of the formula (3) and a matrix S(K) of the formula (4) are respectively defined as following formulas.

[Expression 13]

$$\mathbf{H}(k) = \begin{pmatrix} H_{11}(k) & \cdots & H_{1D}(k) \\ \vdots & \ddots & \vdots \\ H_{R1}(k) & \cdots & H_{RD}(k) \end{pmatrix} = \begin{pmatrix} \mathbf{H}_1(k) & \cdots & \mathbf{H}_m(k) & \cdots & \mathbf{H}_{NUE}(k) \end{pmatrix} \quad \cdots(13)$$

[Expression 14]

$$\mathbf{S}(k) = \begin{bmatrix} S_1(k) & \cdots & S_m(k) & \cdots & S_{NUE}(k) \end{bmatrix}^T \quad \cdots(14)$$

Here, a matrix $H_m(k)$ is an equivalent channel matrix including precoding in a k-th subcarrier of a terminal apparatus 200-m. Moreover, $S_m(k)$ is a desired signal in the k-th subcarrier of the terminal apparatus 200-m.

The replica generation unit 255 generates a received signal replica by using a channel estimation value input from the channel estimation unit 206, an LLR input from the decoding units 210-1 to 210-S or a hard-decision bit.

The interference cancelling unit 256 subtracts the received signal replica generated at the replica generation unit 255 from an output signal of the interference decision unit 251.

The signal estimation unit 257 calculates a reception weight $W_{IRC,m}(k)$ by using H(k) input from the channel estimation unit 206. For example, a following formula is used.

[Expression 15]

$$\mathbf{W}_{IRC,m}(k) = \mathbf{H}_m^{H}(k)(\mathbf{H}_m(k)\mathbf{H}_m^{H}(k) + \sum_{\substack{p \neq m \\ p \in A}} \mathbf{H}_p(k)\mathbf{H}_p^{H}(k) + \mathbf{R}_{ICI})^{-1} \quad \cdots(15)$$

Here, a matrix $R_{ICI}$ is a covariance matrix of interference of one which is not a detection target (also including inter-cell interference and interference cancelling residual) and noise, and A is a set of indexes of a terminal apparatus which is a detection target and which has not been detected.

Moreover, the signal estimation unit 257 multiplies R(k) which is input to the signal detection unit 207 by the reception weight $W_{IRC,m}(k)$ to estimate $S_m(k)$.

Here, a flow of processing of Fig. 6 in a system of, for example, three terminal apparatuses (terminal apparatuses 200-1, 200-2, 200-3) will be described. For example, when $S_1(k)$ is detected as a desired signal in the terminal apparatus 200-1, the signal detection unit 207 of Fig. 6 performs following processing.

In initial processing (i = 0), the interference cancelling unit 256 does not perform interference cancelling. The signal estimation unit 257 estimates $S_3(k)$ and outputs $S_3(k)$ to the demodulation units 208-1 to 208-S. Then, $S_3(k)$ is demodulated and decoded. The replica generation unit 255 generates a received signal replica associated with $S_3(k)$ by using the LLR input from the decoding units 210-1 to 210-S or the hard-decision bit sequence.

When i = 1, the interference cancelling unit 256 subtracts the received signal replica associated with $S_3(k)$, which is input from the replica generation unit 255, from an output signal of the interference decision unit 251. The signal estimation unit 257 estimates $S_2(k)$ from the output signal of the interference cancelling unit 256.

In final processing (i = 2), the interference cancelling unit 256 subtracts the received signal replica associated with $S_3(k)$, which is input from the replica generation unit 255, from R(k), and subtracts the received signal replica associated with $S_2(k)$ from the output signal of the interference decision unit 251. The signal estimation unit 257 estimates $S_1(k)$ from the output signal of the interference cancelling unit 256.

In this manner, the signal detection unit 207 of Fig. 6 subtracts an interference component associated with the terminal apparatus 200-m from the received signal successively at processing other than the final one. Moreover, in the final processing, all interference signals are subtracted from the received signal to estimate a desired signal. Note that, order of subtracting the interference component is in order of $S_3(k)$ and $S_2(k)$ in the present embodiment, but, without limitation thereto, may be in order of $S_2(k)$ and $S_3(k)$.

Note that, Fig. 5 and Fig. 6 provide one example of the interference canceller and the invention is applicable to a terminal apparatus to which the interference canceller is applied regardless of a type of the interference canceller and a weight calculation method.

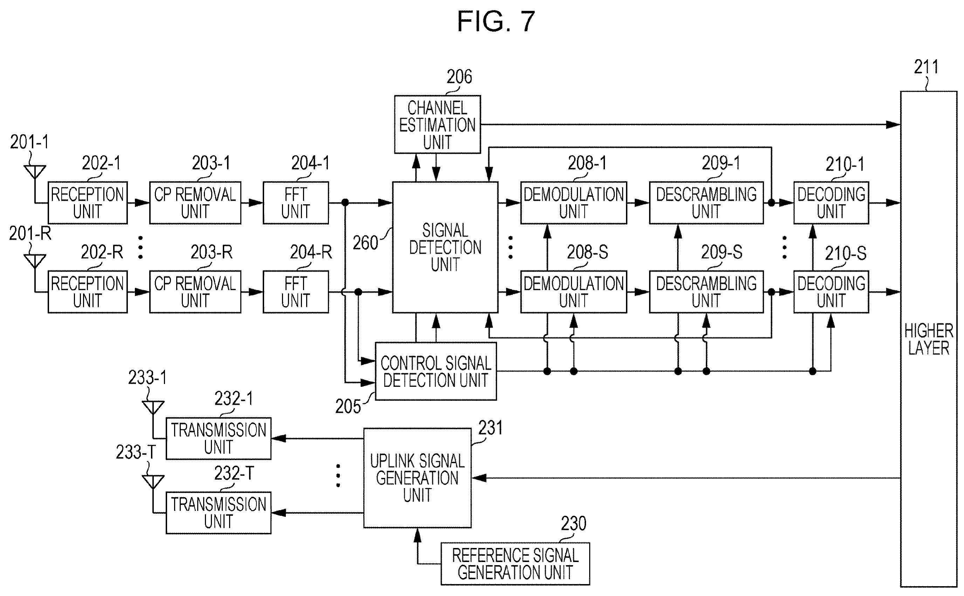

Further, the terminal apparatus 200-1 is not limited to have the aforementioned configuration. Fig. 7 is a schematic block diagram showing another configuration example of the terminal apparatus 200-1 in the present embodiment. A part having processing different from that of Fig. 4 will be mainly described below. Fig. 4 provides a case where interference suppression is performed by using a decoding result, in which the signal detection unit 207 is constituted to perform interference suppression by using outputs of the decoding units 210-1 to 210-S. On the other hand, Fig. 7 provides a case where interference suppression is performed by using a signal after demodulation, in which a signal detection unit 260 is constituted to perform interference cancelling by using outputs of descrambling units 209-1 to 209-S.

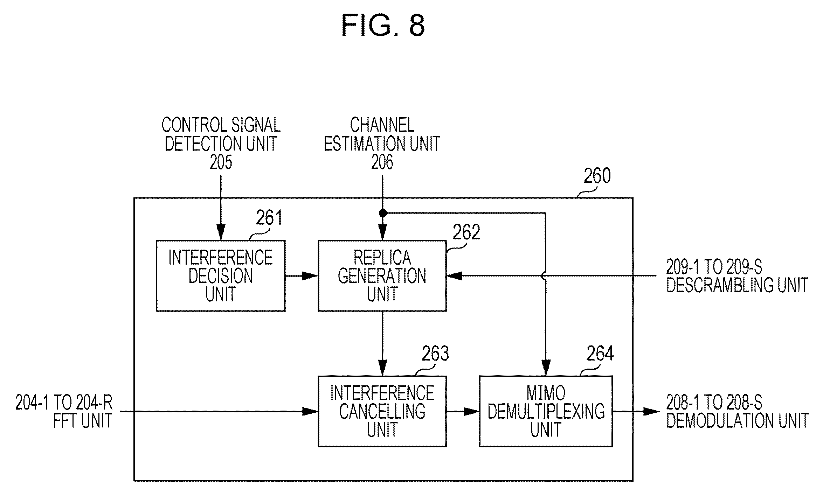

Fig. 8 is a schematic block diagram showing a configuration example of the signal detection unit 260 in the present embodiment. A part having processing different from that of the signal detection unit 207 of Fig. 5 will be mainly described below. The signal detection unit 260 is formed of an interference decision unit 261, a replica generation unit 262, an interference cancelling unit 263 and a MIMO demultiplexing unit 264. Note that, the signal detection unit 260 is not limited to Fig. 8, and an interference canceller by MMSE-IRC may be used.

The interference decision unit 261 decides an interfering terminal apparatus and an interfering resource position (for example, a resource block which includes interference) by using the resource allocation information and the interference information, which are input, to output to the replica generation unit 262. Note that, when a resource in which resource allocation of a certain terminal apparatus and resource allocation of another terminal apparatus are overlapped is notified as the interference information, the interference decision unit 261 is only required to output the input interference information to the replica generation unit 262, and a case of being not through the interference decision unit 261 is also included in the invention.

The replica generation unit 262 generates a received signal replica by using signals input from the descrambling units 209-1 to 209-S.

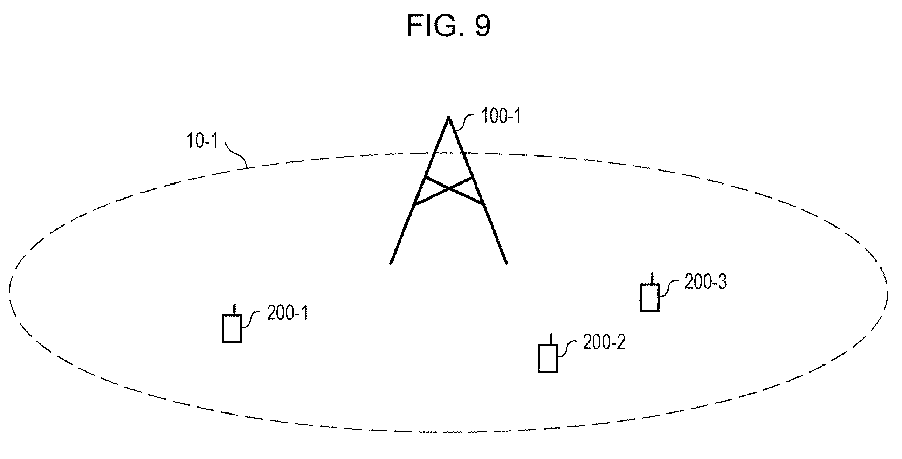

Note that, the present embodiment is also applicable to a communication system in which three or more terminal apparatuses exist. Fig. 9 is a schematic view showing another configuration example of the communication system in the present embodiment. The communication system of Fig. 9 includes the base station apparatus 100-1, the terminal apparatus 200-1, the terminal apparatus 200-2 and the terminal apparatus 200-3.

In the communication system of Fig. 9, as one example, it is set that resource allocation information of the terminal apparatus 200-1 is an RB2, an RB3 and an RB4, resource allocation information of the terminal apparatus 200-2 is an RB1, the RB2 and the RB3, and resource allocation information of the terminal apparatus 200-3 is the RB4, an RB5 and an RB6. In this case, the terminal apparatus 200-1 is interfered with a signal to the terminal apparatus 200-2 in the RB2 and the RB3 and is interfered with a signal to the terminal apparatus 200-3 in the RB4.

When a resource in which resource allocation of a certain terminal apparatus and resource allocation of another terminal apparatus are overlapped is set as the interference information, the interference information of the terminal apparatus 200-1 merely may be information indicating resource blocks thereof. Moreover, the interference information of the terminal apparatus 200-2 is information indicating that the RB2 and the RB3 are interfered with the signal to the terminal apparatus 200-1. Further, the interference information of the terminal apparatus 200-3 is information indicating that the RB4 is interfered with the signal to the terminal apparatus 200-1.

When the resource allocation information of another terminal apparatus is set as the interference information, for example, the interference information of the terminal apparatus 200-1 serves as the resource allocation information of the terminal apparatus 200-2 and the resource allocation information of the terminal apparatus 200-3.

As above, in the present embodiment, the base station apparatus notifies the interference information as information related to other terminal apparatuses which are spatially multiplexed. By using the notified interference information, each of the terminal apparatuses is able to perform processing of suppressing inter-user interference due to communication with other terminal apparatuses with respect to a resource bock which includes interference. Accordingly, with the present embodiment, it is possible to improve spectral efficiency by suppressing inter-user interference.

(Second embodiment)

The example shown in the first embodiment is that the base station apparatus determines interference information of all interfering terminal apparatuses and the terminal apparatuses notify a position of resource which is interfered. The present embodiment shows a method in which a base station apparatus selects partial terminal apparatuses among a plurality of interfering terminal apparatuses and sets information associated with interference of the partial terminal apparatuses as interference information.

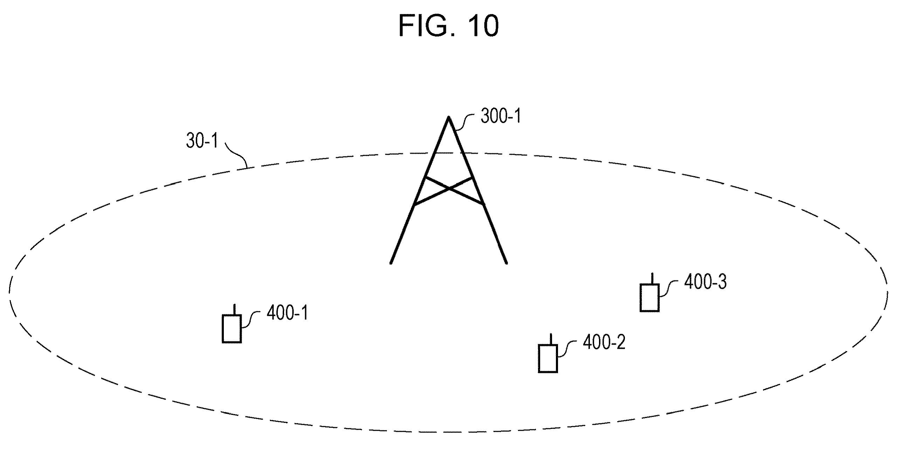

Fig. 10 is a schematic view showing a configuration example of a communication system in the present embodiment. The communication system of Fig. 10 includes a base station apparatus 300-1, a terminal apparatus 400-1, a terminal apparatus 400-2 and a terminal apparatus 400-3.

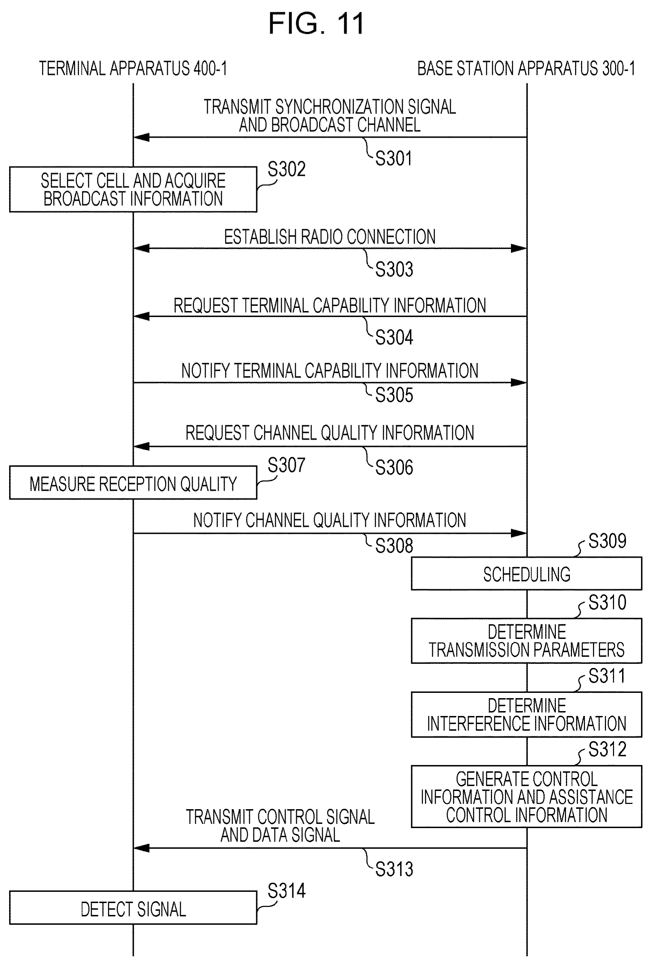

Fig. 11 is a sequence diagram showing processing between the base station apparatus and the terminal apparatus in the communication system according to the present embodiment. Fig. 11 shows connection between the base station apparatus 300-1 and the terminal apparatus 400-1 and data transmission processing of downlink. Note that, similar processing is performed also between the base station apparatus 300-1 and the terminal apparatus 400-2 and between the base station apparatus 300-1 and the terminal apparatus 400-3. Note that, processing of S301 to S314 of Fig. 11 respectively corresponds to the processing of S101 to S114 of Fig. 2. A part having different processing from the processing of the first embodiment (Fig. 2) will be mainly described below.

The base station apparatus 300-1 performs scheduling of the terminal apparatuses to be connected thereto (S309). In the present embodiment, as one example, the base station apparatus 300-1 determines resource allocation information of the terminal apparatus 400-1 as an RB2, an RB3 and an RB4, resource allocation information of the terminal apparatus 400-2 as an RB1, the RB2 and the RB3, and resource allocation information of the terminal apparatus 400-3 as the RB4, an RB5 and an RB6.

The base station apparatus 300-1 determines interference information from the resource allocation information of each of the terminal apparatuses (S311). The base station apparatus 300-1 determines, as the interference information, information associated with a position of a resource of the terminal apparatus subjected to a large influence of interference among interference applied to a certain terminal apparatus due to communication of another terminal apparatus. Note that, the base station apparatus 300-1 may select one or more terminal apparatuses subjected to a large influence of interference.

As a method for selecting the terminal apparatus subjected to a large influence of interference, the terminal apparatus which has the large number of resources overlapped with resource allocation of a certain terminal apparatus may be selected. In the present embodiment, the resource allocation information of the terminal apparatus 300-1 is overlapped with two resource blocks in the resource allocation information of the terminal apparatus 300-2 and overlapped with one resource block in the resource allocation information of the terminal apparatus 200-3. Accordingly, the terminal apparatus 300-1 is able to judge that much more resources of the terminal apparatus 300-2 are interfered than those of the terminal apparatus 300-3, and thus sets information of the terminal apparatus 300-2 as the interference information. For example, the interference information of the terminal apparatus 300-1 may be set as the resource allocation information of the terminal apparatus 300-2 (RB1, RB2 and RB3) or may be set as the resource blocks (RB2 and RB3) in which the resource allocation information of the terminal apparatus 300-1 and the resource allocation information of the terminal apparatus 300-2 are overlapped. Note that, the interference information of the terminal apparatus 300-2 and the interference information of the terminal apparatus 300-3 are also determined with a similar method.

Moreover, as a method for selecting a terminal apparatus subjected to a large influence of interference, a terminal apparatus which has large transmission power allocated by the base station apparatus to each terminal apparatus among a plurality of interfering terminal apparatuses may be selected.

A configuration of the base station apparatus 300-1 in the present embodiment is similar to the configuration of the base station apparatus 100-1 in the first embodiment (Fig. 3). Moreover, configurations of the terminal apparatus 400-1, the terminal apparatus 400-2 and the terminal apparatus 400-3 are similar to the configuration of the terminal apparatus 200-1 in the first embodiment (Fig. 4 and Fig. 7).

As above, in the present embodiment, the base station apparatus selects partial terminal apparatuses among a plurality of interfering terminal apparatuses and notifies each of the terminal apparatuses of information of the partial terminal apparatuses as interference information. This makes it possible to improve spectral efficiency by suppressing inter-user interference. Further, when compared to a case where information of all interfering terminal apparatuses is notified, it is possible to improve spectral efficiency by suppressing increase in an amount of control information.

(Third embodiment)

While the example that inter-user interference due to spatial multiplexing of a plurality of terminal apparatuses is suppressed is shown in the first embodiment and the second embodiment, an example that inter-cell interference under a multi cell environment is suppressed is shown in the present embodiment.

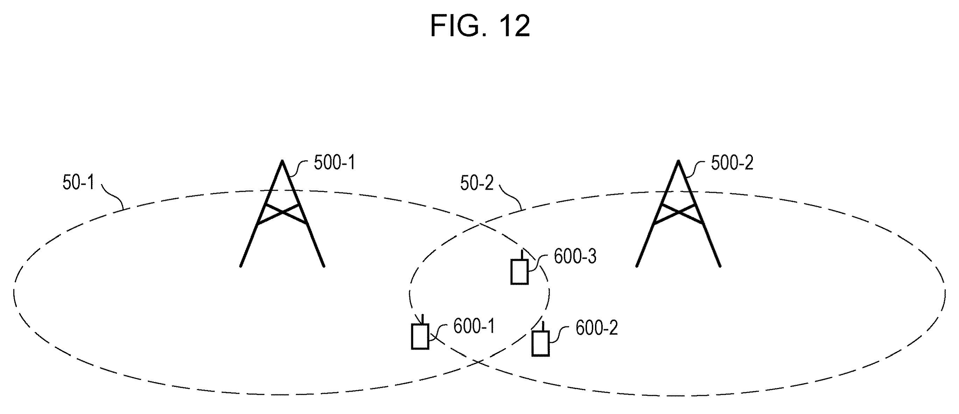

Fig. 12 is a schematic view showing a configuration of a communication system in the present embodiment. As shown in Fig. 12, in the communication system of the present embodiment, a cell 50-1 which is a communication area of a base station apparatus 500-1 and a cell 50-2 which is a communication area of a base station apparatus 500-2 are partially overlapped. A terminal apparatus 600-1 is connected to the base station apparatus 500-1, and a terminal apparatus 600-2 and a terminal apparatus 600-3 are connected to the base station apparatus 500-2. The base station apparatus 300-1 and the base station apparatus 300-2 are connected with a backhaul line, and information is able to be notified mutually between the base station apparatuses. The backhaul line may use a cable like an optical fiber or X2 interface for connection or may use wireless like a relay base station.

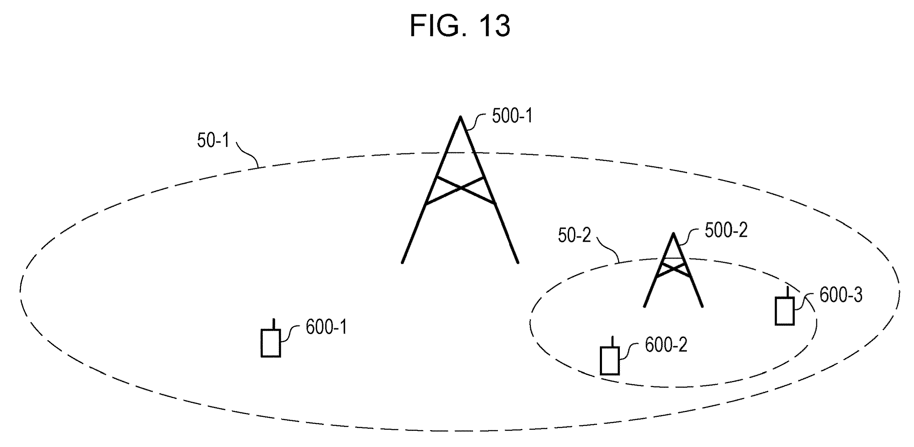

Fig. 13 is a schematic view showing another configuration example of the communication system in the present embodiment. As shown in Fig. 13, in the communication system according to the present embodiment, the base station apparatus 500-2 may be arranged in the communication area of the base station apparatus 500-1.

Note that, the present embodiment is applicable as long as being under a multi cell environment, and the number of cells, the number of base station apparatuses, the number of terminal apparatuses, a type of a cell (for example, such as a macro cell, a pico cell, a femto cell or a small cell), a type of a base station apparatus (for example, such as a macro cell base station, a pico cell base station, a femto cell base station, or a low-power base station), and the like are not limited to those of the present embodiment.

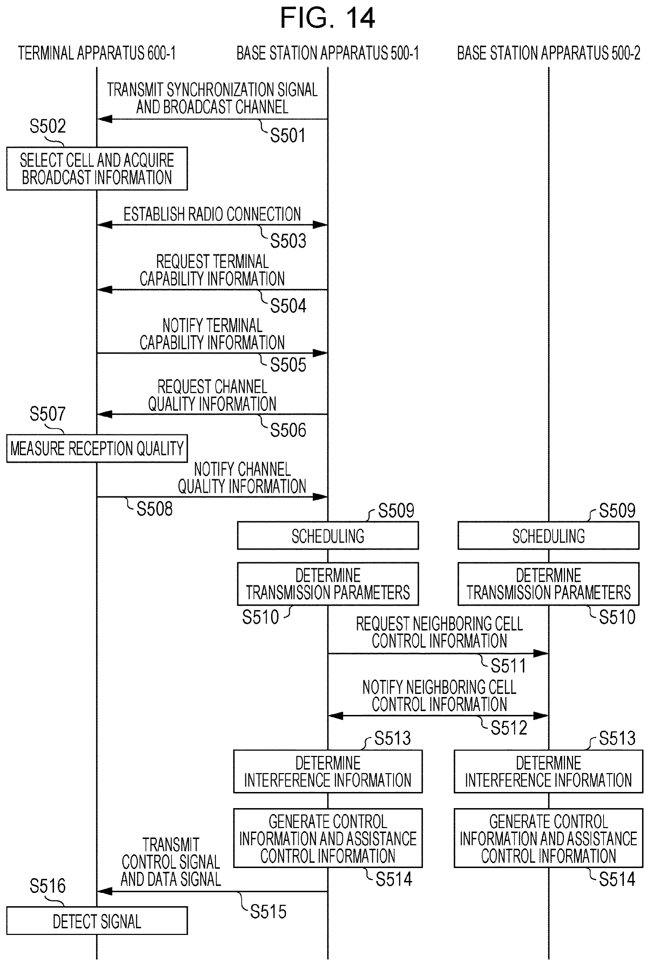

Fig. 14 is a sequence diagram showing processing between the base station apparatuses and the terminal apparatus in the communication system according to the present embodiment. Fig. 14 is for describing connection between the base station apparatuses 500-1 and 500-2 and the terminal apparatus 600-1 connected to the base station apparatus 500-1, and data transmission processing of downlink. Further, though not shown, the terminal apparatus 600-2 and the terminal apparatus 600-3 which are connected to the base station apparatus 500-2 are also able to perform similar processing. Processing of S501 to S510 of Fig. 14 respectively corresponds to the processing of S101 to S110 of Fig. 2, and processing of S513 to S516 of Fig. 14 respectively corresponds to the processing of S111 to S114 of Fig. 2. A part having different processing from the processing of the first embodiment (Fig. 2) will be mainly described below.

The base station apparatus 500-1 and the base station apparatus 500-2 perform scheduling of terminal apparatuses to be connected thereto (S509). The base station apparatus 500-1 determines resource allocation information of the terminal apparatus 600-1 and the base station apparatus 500-2 determines resource allocation information of the terminal apparatus 600-2 and the terminal apparatus 600-3.

The base station apparatus 500-1 and the base station apparatus 500-2 determine transmission parameters for each of the terminal apparatuses (S510). The base station apparatus 500-1 requests neighboring cell control information to the base station apparatus 500-2 of a neighboring cell (S511). A cell ID, resource allocation information, MCS information, information indicating a rank, information indicating a port number, information indicating a transmission mode, information indicating transmission power (such as a data signal channel, a reference signal, or a power ratio of mutual control channels), and information related to a reference signal (such as CRS) of the neighboring cell used for estimating channel information (such as scheduling information of a reference signal or coded sequence of the reference signal) are able to be included as the neighboring cell control information.

The base station apparatus 500-1 receives the request of the neighboring cell control information, and notifies control information of the base station apparatus in accordance with the request (S512). Note that, a backhaul line is able to be used for the request of the neighboring cell control information (S511) and the notification of the neighboring cell control information (S512).

The base station apparatus 500-1 and the base station apparatus 500-2 determine interference information from the resource allocation information of each of the terminal apparatuses (S513). The base station apparatus 500-1 determines the interference information by using the resource allocation information of the terminal apparatus 600-1 and the resource allocation information notified from the base station apparatus 500-2 (the resource allocation information of the terminal apparatus 600-2 and the terminal apparatus 600-3). Note that, the method of the first embodiment (S111 of Fig. 2) may be used or the method of the second embodiment (S311 of Fig. 11) may be used for the interference information.

A configuration of the base station apparatus 500-1 in the present embodiment is similar to the configuration of the base station apparatus 100-1 in the first embodiment (Fig. 3). In the present embodiment, however, the base station apparatus 500-1 and the base station apparatus 500-2 exchange information of each of the terminal apparatuses between the base station apparatuses by using the backhaul line. Moreover, configurations of the terminal apparatus 600-1, the terminal apparatus 600-2 and the terminal apparatus 600-3 in the present embodiment are similar to the configuration of the terminal apparatus 200-1 in the first embodiment (Fig. 4).

As above, in the present embodiment, for suppressing interference under a multi cell environment, information of terminal apparatuses is shared between a plurality of base station apparatuses and each of the base station apparatuses notifies the terminal apparatuses of the interference information. Each of the terminal apparatuses performs processing of suppressing interference due to communication with another terminal apparatus with respect to a resource block including interference by using the notified interference information. This makes it possible to improve spectral efficiency by suppressing interference under the multi cell environment.

Note that, a program which is operated in the base station apparatus and a mobile station apparatus according to the invention is a program which controls a CPU and the like (program that causes a computer to function) so as to realize functions of the aforementioned embodiments related to the invention. In addition, information which is handled by the apparatuses is temporarily accumulated in a RAM at the time of processing thereof, and then stored in various ROMs or an HDD, and is read, modified, and written by the CPU as necessary. A recording medium that stores the program may be any of a semiconductor medium (for example, a ROM, a nonvolatile memory card or the like), an optical recording medium (for example, a DVD, an MO, an MD, a CD, a BD or the like) and a magnetic recording medium (for example, a magnetic tape, a flexible disc or the like). Moreover, there is a case where, by executing the loaded program, not only the functions of the embodiments described above are realized, but also by performing processing in cooperation with an operating system, other application programs or the like based on an instruction of the program, the functions of the invention are realized.

When being distributed in the market, the program is able to be stored in a portable recording medium and distributed or be transferred to a server computer connected through a network such as the Internet. In this case, a storage apparatus of the server computer is also included in the invention. A part or all of the mobile station apparatus and the base station apparatus in the embodiments described above may be realized as an LSI which is a typical integrated circuit. Each functional block of a reception apparatus may be individually formed into a chip, or a part or all thereof may be formed into a chip. When each functional block is made into an integrated circuit, an integrated circuit control unit for controlling them is added.

Further, a method for making into an integrated circuit is not limited to the LSI and a dedicated circuit or a versatile processor may be used for realization. Further, in a case where a technique for making into an integrated circuit in place of the LSI appears with advance of a semiconductor technique, an integrated circuit by the technique is also able to be used.

Note that, the invention of the present application is not limited to the embodiments described above. The terminal apparatus of the invention of the present application is not limited to be applied to the mobile station apparatus, but, needless to say, is applicable to stationary or unmovable electronic equipment which is installed indoors or outdoors such as, for example, AV equipment, kitchen equipment, cleaning/washing machine, air conditioning equipment, office equipment, automatic vending machine, other domestic equipment, and the like.

As above, the embodiments of the invention have been described in detail with reference to drawings, but specific configurations are not limited to the embodiments, and a design and the like which are not departed from the main subject of the invention are also included in a scope of claims.


Industrial Applicability

The invention is suitably used for a base station apparatus, a terminal apparatus and a communication system.


Reference Signs List

| | |
|---|---|
| 100-1, 300-1, 500-1, 500-2 | base station apparatus |
| 200-1, 200-2, 200-3, 400-1, 400-2, 400-3, 600-1,600-2,600-3 | terminal apparatus |
| 101 | higher layer |
| 102-1 to 102-S | coding unit |

| 103-1 to 103-S | scrambling unit |
| 104-1 to 104-S | modulation unit |
| 105 | layer mapping unit |
| 106 | precoding unit |
| 107 | reference signal generation unit |
| 108 | control signal generation unit |
| 109-1 to 109-T | resource mapping unit |
| 110-1 to 110-T | OFDM signal generation unit |
| 111-1 to 111-T | transmission unit |
| 112-1 to 112-T | transmit antenna |
| 130-1 to 130-R | receive antenna |
| 131-1 to 131-R | reception unit |
| 132 | report information detection unit |
| 201-1 to 201-R | receive antenna |
| 202-1 to 202-R | reception unit |
| 203-1 to 203-R | CP removal unit |
| 204-1 to 204-R | FFT unit |
| 205 | control signal detection unit |
| 206 | channel estimation unit |
| 207, 260 | signal detection unit |
| 208-1 to 208-S | demodulation unit |
| 209-1 to 209-S | descrambling unit |
| 210-1 to 210-S | decoding unit |
| 211 | higher layer |
| 230 | reference signal generation unit |
| 231 | uplink signal generation unit |
| 232-1 to 232-T | transmission unit |
| 233-1 to 233-T | transmit antenna |
| 251, 261 | interference decision unit |
| 252, 255, 262 | replica generation unit |
| 253, 256, 263 | interference cancelling unit |
| 254, 264 | MIMO demultiplexing unit |
| 257 | signal estimation unit |

**Claims**

1. A base station apparatus that transmits a signal to a terminal apparatus connected thereto, wherein interference information indicating at least part of positions of resources of partial terminal apparatuses among terminal apparatuses other than the terminal apparatus is generated, and the interference information is transmitted to the terminal apparatus.

2. The base station apparatus according to claim 1, wherein the interference information is resource allocation information.

3. The base station apparatus according to claim 2, wherein the resource allocation information is information indicating a position of a resource block.

4. The base station apparatus according to claim 1, wherein the interference information is information indicating a position of a resource in which resource allocation of the terminal apparatus and resource allocation of the partial terminal apparatuses are overlapped.

5. The base station apparatus according to claim 2 or claim 4, wherein the interference information is information of at least one terminal apparatus which exists in a same cell as that of the terminal apparatus.

6. The base station apparatus according to claim 2 or claim 4, wherein the interference information is information of at least one terminal apparatus which exists in a cell different from that of the terminal apparatus.

17

7. The base station apparatus according to claim 1, wherein the interference information is selected in order from interference information of a terminal apparatus that has the largest number of resources overlapping with resource allocation of the terminal apparatus among the partial terminal apparatuses.

8. The base station apparatus according to claim 1, wherein the interference information is selected in order from interference information of a terminal apparatus that has the largest transmission power to be allocated among the partial terminal apparatuses.

9. A terminal apparatus that detects resource allocation information to the terminal apparatus and interference information which is information related to other terminal apparatuses from a control signal transmitted from a base station apparatus.

10. The terminal apparatus according to claim 9, wherein a signal indicating a position of a resource included in the resource allocation information of the terminal apparatus and the interference information is decoded among signals transmitted from the base station apparatus.

11. The terminal apparatus according to claim 9, wherein an interfering terminal apparatus and an interfering resource position are decided from the resource allocation information to the terminal apparatus and the interference information.

12. The terminal apparatus according to claim 9, wherein an interfering terminal apparatus and an interfering resource position are decided from the interference information.

13. The terminal apparatus according to claim 11 or 12,
wherein a received signal replica is generated by using at least part of decoded data of the interfering resource position and the interfering terminal apparatus and subtracted from a signal transmitted from the base station apparatus.

14. A communication system having a base station apparatus and a terminal apparatus, comprising
the base station apparatus that generates interference information indicating at least part of positions of resources of partial terminal apparatuses among terminal apparatuses other than the terminal apparatus and transmits the interference information to the terminal apparatus, and
the terminal apparatus that receives control information notified from the base station apparatus and detects at least two pieces of resource allocation information from the control information.

FIG. 1

# FIG. 2

TERMINAL APPARATUS 200-1                                    BASE STATION APPARATUS 100-1

TRANSMIT SYNCHRONIZATION SIGNAL
AND BROADCAST CHANNEL
S101

| SELECT CELL AND ACQUIRE |  S102
| BROADCAST INFORMATION |

ESTABLISH RADIO CONNECTION
S103

REQUEST TERMINAL CAPABILITY INFORMATION
S104

NOTIFY TERMINAL CAPABILITY INFORMATION
S105

REQUEST CHANNEL QUALITY INFORMATION
S107                          S106

| MEASURE RECEPTION QUALITY |

NOTIFY CHANNEL QUALITY INFORMATION
S108
S109

| SCHEDULING |
S110

| DETERMINE |
| TRANSMISSION PARAMETERS |
S111

| DETERMINE |
| INTERFERENCE INFORMATION |
S112

| GENERATE CONTROL |
| INFORMATION AND ASSISTANCE |
| CONTROL INFORMATION |

TRANSMIT CONTROL SIGNAL
AND DATA SIGNAL
S113

| DETECT SIGNAL |  S114

## FIG. 3

FIG. 4

## FIG. 5

CONTROL SIGNAL
DETECTION UNIT
205

CHANNEL
ESTIMATION UNIT
206

207

251
INTERFERENCE
DECISION
UNIT

252
REPLICA
GENERATION
UNIT

210-1 TO 210-S
DECODING UNIT

253
INTERFERENCE
CANCELLING
UNIT

254
MIMO
DEMULTIPLEXING
UNIT

204-1 TO 204-R
FFT UNIT

208-1 TO 208-S
DEMODULATION UNIT

EP 2 983 412 A1

# FIG. 6

CONTROL SIGNAL
DETECTION UNIT
205

CHANNEL
ESTIMATION UNIT
206

207

251

INTERFERENCE
DECISION
UNIT

255

REPLICA
GENERATION
UNIT

210-1 TO 210-S
DECODING UNIT

256

INTERFERENCE
CANCELLING
UNIT

257

SIGNAL
ESTIMATION
UNIT

204-1 TO 204-R
FFT UNIT

208-1 TO 208-S
DEMODULATION UNIT

## FIG. 7

FIG. 8

CONTROL SIGNAL
DETECTION UNIT
205

CHANNEL
ESTIMATION UNIT
206

260

261

INTERFERENCE
DECISION
UNIT

262

REPLICA
GENERATION
UNIT

209-1 TO 209-S
DESCRAMBLING UNIT

204-1 TO 204-R
FFT UNIT

263

INTERFERENCE
CANCELLING
UNIT

264

MIMO
DEMULTIPLEXING
UNIT

208-1 TO 208-S
DEMODULATION UNIT

EP 2 983 412 A1

FIG. 9

EP 2 983 412 A1

FIG. 10

30-1

300-1

400-1

400-2

400-3

# FIG. 11

TERMINAL APPARATUS 400-1                    BASE STATION APPARATUS 300-1

TRANSMIT SYNCHRONIZATION SIGNAL
AND BROADCAST CHANNEL
S301

SELECT CELL AND ACQUIRE
BROADCAST INFORMATION — S302

ESTABLISH RADIO CONNECTION
S303

REQUEST TERMINAL CAPABILITY INFORMATION
S304

NOTIFY TERMINAL CAPABILITY INFORMATION
S305

REQUEST CHANNEL QUALITY INFORMATION
S307                    S306

MEASURE RECEPTION QUALITY

NOTIFY CHANNEL QUALITY INFORMATION
S308                    S309

SCHEDULING

S310

DETERMINE
TRANSMISSION PARAMETERS

S311

DETERMINE
INTERFERENCE INFORMATION

S312

GENERATE CONTROL
INFORMATION AND ASSISTANCE
CONTROL INFORMATION

TRANSMIT CONTROL SIGNAL
AND DATA SIGNAL
S313

DETECT SIGNAL — S314

FIG. 12

FIG. 13

EP 2 983 412 A1

# FIG. 14

| TERMINAL APPARATUS 600-1 | BASE STATION APPARATUS 500-1 | BASE STATION APPARATUS 500-2 |
|---|---|---|

TRANSMIT SYNCHRONIZATION SIGNAL
AND BROADCAST CHANNEL
S501

S502

SELECT CELL AND ACQUIRE
BROADCAST INFORMATION

ESTABLISH RADIO CONNECTION
S503

REQUEST TERMINAL
CAPABILITY INFORMATION
S504

NOTIFY TERMINAL
CAPABILITY INFORMATION
S505

REQUEST CHANNEL
QUALITY INFORMATION
S506

S507

MEASURE RECEPTION QUALITY

NOTIFY CHANNEL
QUALITY INFORMATION
S508

S509

| SCHEDULING | SCHEDULING |
|---|---|

S509

| DETERMINE TRANSMISSION PARAMETERS | DETERMINE TRANSMISSION PARAMETERS |
|---|---|

S510

S510

REQUEST NEIGHBORING CELL
CONTROL INFORMATION
S511

NOTIFY NEIGHBORING CELL
CONTROL INFORMATION
S512

S513

| DETERMINE INTERFERENCE INFORMATION | DETERMINE INTERFERENCE INFORMATION |
|---|---|

S513

| GENERATE CONTROL INFORMATION AND ASSISTANCE CONTROL INFORMATION | GENERATE CONTROL INFORMATION AND ASSISTANCE CONTROL INFORMATION |
|---|---|

TRANSMIT
CONTROL SIGNAL
AND DATA SIGNAL
S515

S514

S514

S516

DETECT SIGNAL

**INTERNATIONAL SEARCH REPORT**

| International application No. |
|---|
| PCT/JP2014/060007 |

**A. CLASSIFICATION OF SUBJECT MATTER**
*H04W48/12(2009.01)i*

According to International Patent Classification (IPC) or to both national classification and IPC

**B. FIELDS SEARCHED**

Minimum documentation searched (classification system followed by classification symbols)
H04W48/12

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2008/093621 A1 (Sharp Corp.),<br>07 August 2008 (07.08.2008),<br>paragraphs [0077], [0088] to [0090], [0108] to<br>[0110]<br>& US 2010/0075689 A1    & US 2010/0273501 A1<br>& US 2010/0273502 A1    & EP 2120475 A1<br>& EP 2227061 A1    & EP 2229031 A1<br>& CA 2676950 A    & CN 101601320 A<br>& CN 101820670 A    & CN 101827437 A<br>& CN 101860945 A    & CA 2776098 A | 9,10<br>1-8,11-14 |
| Y<br>A | WO 2012/147494 A1 (Kyocera Corp.),<br>01 November 2012 (01.11.2012),<br>paragraphs [0003], [0031]<br>& JP 2012-231267 A | 9,10<br>1-8,11-14 |

☐ Further documents are listed in the continuation of Box C.     ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 12 June, 2014 (12.06.14) | 24 June, 2014 (24.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013078308 A

**Non-patent literature cited in the description**

- **QUENTIN H. SPENCER ; CHRISTIAN B. PEEL ; A. LEE SWINDLEHURST ; MARTIN HAARDT.** An Introduction to the Multi-User MIMO Downlink. *IEEE Communications Magazine,* October 2004

- *3GPP TR 36.814 V9.0.0,* March 2010